# EUROPÄISCHE PATENTANMELDUNG

(11) **EP 0 700 176 A2**
(43) Veröffentlichungstag der Anmeldung: **06.03.1996**
(21) Anmeldenummer: 95113134.1
(22) Anmeldetag: 22.08.1995
(51) Int. Cl.: H04B 10/12

(54) **Optischer Sender zum Aussenden eines intensitäts- und phasenmodulierten Lichtstrahls**

(30) Priorität: 29.08.1994 CH 2644/94
(71) Anmelder: ASCOM TECH AG, CH-3018 Bern (CH)
(72) Erfinder: Wang, Yu, Dr. Ing., CH-3005 Bern (CH)
(74) Vertreter: Schwerdtel, Eberhard, Dr.

(57) **Zusammenfassung**

Der optische Sender (3) dient zum Aussenden eines Lichtstrahls A, der ein periodisches Hilfsträgersignal aufweist, welches durch ein Nutzsignal (NS) phasenwinkel- oder frequenzmoduliert ist. Der Sender (3) umfasst zwei Laser (10, 11), zwei Strahlteiler (12, 13), zwei Strahlkoppler (15, 16), einen Lichtmodulator (14), eine ringförmige Optikfaser (18) und optische Verbindungen zum Verbinden dieser Einheiten. Hierzu kommen mit Vorteil ein oder zwei Polarisationsüberwacher (21, 23), und ein Regelkreis aus einem weiteren Strahlkoppler (25), einer Fotodiode (27) und einer Steuerschaltung (28) zur Regelung der Laser (10, 11). Die von den Lasern (10, 11) abgegebenen Lichtstrahlen (L1, L2) werden durch die Strahlteiler (12, 13) geteilt. Die Hauptstrahlen (L1, L2) laufen über den ersten Strahlkoppler (15) gegensinnig in die Optikfaser (18) ein und erzeugen in dieser durch stimulierte Brillouin-Streuung rücklaufende Lichtstrahlen (L5, L6) leicht veränderter Frequenz. Der eine rücklaufende Strahl (L5) durchläuft den Modulator (14) und wird in diesem phasenmoduliert. Danach vereinigen sich die rücklaufenden Strahlen (L5, L6) im zweiten Koppler (16) und ergeben den Ausgangsstrahl A. Die Nebenstrahlen (L3, L4) der Strahlteiler (12, 13) vereinigen sich im weiteren Koppler (25) und werden durch die Fotodiode (27) in einen Strom umgewandelt. Dieser erzeugt in der Steuerschaltung (28) ein Regelsignal, durch das die Differenz der optischen Frequenzen der beiden Laser (10, 11) stabilisiert wird.

## Beschreibung

Die Erfindung betrifft einen optischen Sender zum Aussenden eines intensitäts- und phasenmodulierten Lichtstrahls entsprechend dem Oberbegriff des ersten Patentanspruchs.

Die Verwendung von Lichtstrahlen als Träger für eine Informationsübertragung ist bekannt. Es ist weiter bekannt, dass es hierbei notwendig ist, den vom Strahlsender ausgesandten Strahl zu modulieren. Bei Laserstrahlen kann eine solche Modulation am einfachsten dadurch erfolgen, dass durch Variation des Laserspeisestromes die Intensität des ausgesandten Strahles verändert wird. Dies bewirkt eine spezielle Art von Amplitudenmodulation. Den Vorteilen dieser einfachen, direkten Modulationsart steht jedoch ein relativ schlechtes Signal/Rausch-Verhältnis auf der Empfangsseite gegenüber.

Die Winkelmodulation eines periodischen Trägersignals verhält sich bezüglich des Signal/Rausch-Verhältnisses wesentlich besser als die Amplitudenmodulation, wenn gewisse Bedingungen erfüllt sind wie z.B. geeignete Form des Trägersignals und an die Verhältnisse angepasste Grösse der Phasenamplitude. Für die Informationsübertragung auf Glasfaserstrecken ist daher eine Winkel- oder Phasenmodulation grundsätzlich sehr interessant.

Es ist beispielsweise aus K. Petermann, 〈Laser diode modulation and noise〉, Kluwer Academic Publishers, 1988 eine Methode zur Erzeugung einer phasenmodulierbaren Trägerfrequenz bekannt. Hierbei werden zwei unabhängige Laser als Quellen von zwei Lichtstrahlen verwendet, die unterschiedliche optische Frequenzen f1 und f2 aufweisen. Die Differenz dieser Frequenzen liegt beispielsweise im GigaHertz-Bereich, also bei elektrischen Höchstfrequenzen und kann durch einen optischen Modulator im einen der beiden Lichtstrahlen bequem durch ein Nutzsignal phasenmoduliert werden. Dem einfachen Aufbau dieser Einrichtung steht eine erhebliche Instabilität gegenüber, die durch das voneinander unabhängige Verhalten der beiden Laser hervorgerufen wird.

Aus der nachveröffentlichten Schrift EP-A-633 672 ist eine weitere Methode zur Erzeugung einer phasenmodulierbaren Trägerfrequenz bekannt. Hierbei wird die Eigenschaft einer optischen Monomodefaser ausgenützt, die auf einen ankommenden Lichtstrahl und aufgrund einer hierdurch stimulierten Brillouin-Streuung mit der Erzeugung einer Stokes-Welle und damit eines rücklaufenden Lichtstrahles antwortet. Der rücklaufende Lichtstrahl weist einen Frequenzversatz von etwa 13 GHz gegenüber dem ankommenden Lichtstrahl auf. Durch Mischung des ankommenden und des rücklaufenden Lichtstrahls lässt sich wiederum eine Trägerfrequenz im GigaHertz-Bereich gewinnen, die optisch mit einem Nutzsignal phasenmodulierbar ist. Bei dieser Methode gibt es nur eine aktive Lichtquelle, von der sich beide Lichtstrahlen ableiten. Aus diesem Grund ist diese Methode grundsätzlich stabiler als die vorgehend beschriebene Methode.

Bei anderen, bisherigen Versuchen zur Modulation des Phasenwinkels von sehr hochfrequenten Trägersignalen mit breitbandigen Nutzsignalen, z.B. im Mikrowellenbereich, spielten Modulationsverzerrungen stets eine erhebliche Rolle. Diese Verzerrungen haben bisher eine qualitativ ausreichende Übertragung von Nutzsignalen der genannten Art mittels Phasenmodulation verhindert.

Aus dieser Situation und dem allgemein bekannten Stand der Technik heraus ergibt sich die Aufgabe der Erfindung, eine Winkelmodulationseinrichtung für sehr hohe Trägerfrequenzen und sehr breitbandige Nutzsignale anzugeben. Hierbei soll die Einrichtung stabil und linear arbeiten und es gestatten, z.B. einen entsprechend modulierten Lichtstrahl auf eine Übertragungsstrecke auszusenden. Die Frequenzen der Nutzsignale sollen vor allem im GigaHertz-Bereich liegen.

Die Lösung dieser Aufgabe ist durch den kennzeichnenden Teil des unabhängigen Anspruchs gegeben. Die abhängigen Ansprüche geben Einzelheiten und technische Ausgestaltungen an.

Im folgenden wird die Erfindung anhand von vier Figuren beispielsweise beschrieben. Die Figuren zeigen:
Fig. 1 - Blockschaltbild eines optischen Senders,
Fig. 2 - Blockschaltbild einer ersten Verwendung des optischen Senders,
Fig. 3 - Blockschaltbild einer zweiten Verwendung des optischen Senders.

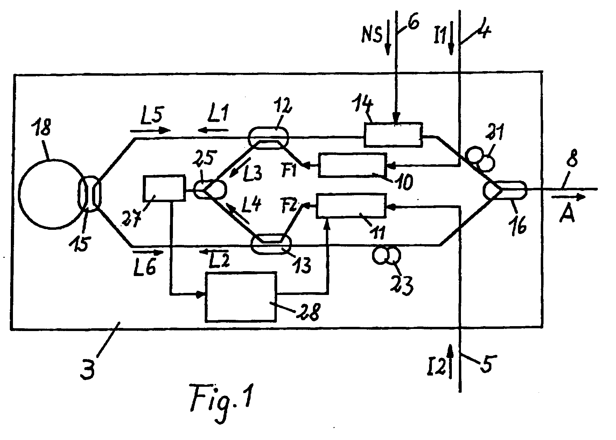

Fig. 1 zeigt den Aufbau des optischen Senders 3. Dieser Sender 3 besitzt zwei elektrische Speiseeingänge 4, 5, einen elektrischen Steuereingang 6 und einen optischen Ausgang 8. Der Sender umfasst bei minimalem Ausbau zwei Laser 10, 11, zwei Strahlteiler 12, 13 einen Lichtmodulator 14, zwei Strahlkoppler 15, 16 und eine Optikfaser 18. Weiter gehören zum Sender 3 mehrere optische Verbindungen zwischen den genannten Elementen 10, 11, 12, 13, 14, 15, 16, 18.

Zum genannten Minimalbestand der Elemente 10, 11, 12, 13, 15, 14, 16, 18 kommen mit Vorteil weitere Elemente hinzu, insbesondere zwei Polarisationsüberwacher 21, 23 (optical polarisation controller), ein weiterer Strahlkoppler 25, eine Fotodiode 27 und eine dieser nachgeschaltete Steuerschaltung 28 zum Steuern des einen Lasers 11.

Der Sender 3 basiert zu wesentlichem Teil auf einem nichtlinearen Fasereffekt, der unter der Bezeichnung "stimulierte Brillouin-Streuung" bekannt ist. Hierzu wird auf die Publikation D. Cotter, "Stimulated Brillouin scattering in monomode optical fiber", Journal of Optical Communication, 4, Seiten 10-19, 1983 verwiesen. Ein ankommender Lichtstrahl bewirkt bei diesem Effekt in einer Optikfaser 18 eine sehr starke Stokes-Welle in Rückwärtsrichtung, sobald die sogenannte Brillouin-Schwelle überschritten wird. Diese Stokes-Welle besitzt bei einer Lichtwellenlänge des ankommenden Strahls von z.B. 1300 nm gegenüber dessen Wellenlänge einen Frequenzversatz von etwa 13 GHz. Insgesamt resultiert hieraus ein sekundärer Lichtstrahl in Gegenrichtung zum primären Strahl, wobei die beiden Lichtwellenlängen entsprechend verschieden sind.

Die Optikfaser 18 bildet einen Ring aus einer Monomodefaser. Die Faser weist hierbei eine Länge auf, die zwischen einigen wenigen Metern und einigen -zig Metern liegt. Die genaue Länge ist dabei abhängig vom Fasertyp und vom Lasertyp. Eine experimentell erprobte Länge ist beispielsweise 40 m. Die Faser 18 ist hierbei über den Strahlkoppler 15 zum einen optisch in sich selbst geschlossen und zum anderen über zwei getrennte Ein/Ausgänge optisch mit den Strahlteilern 12, 13 verbunden. Die Faser 18 ist schliesslich bevorzugt aus noch zu beschreibendem Grund als einlagige Spule gewickelt. Der Kopplungsgrad des Strahlkopplers 15 muss an die Gesamtanordnung angepasst sein. Ein experimentell erprobter Wert beträgt etwa 1:9.

Der optische Sender 3 arbeitet wie folgt: Die Laser 10 und 11 werden über die Speiseeingänge 4 bzw. 5 durch im wesentlichen konstante elektrische Ströme I1, I2 gespeist. Sie geben hierdurch an ihren Ausgängen einen ersten L₁ bzw. einen zweiten Lichtstrahl L₂ mit einer Lichtfrequenz F₁ bzw. F₂ und etwa gleicher konstanter Intensität ab. Die Frequenzen F₁, F₂ entsprechen beispielsweise in etwa der genannten Lichtwellenlänge von 1300 nm. Der erste Lichtstrahl L₁ erreicht den ersten Strahlteiler 12, der zweite Lichtstrahl L2 den zweiten Strahlteiler 13.

Von den Lichtstrahlen L1, L2 werden in den Strahlteilern 12 bzw. 13 jeweils Teilstrahlen L3, L4 relativ geringer Intensität abgezweigt. Diese Teilstrahlen werden durch den Strahlkoppler 25 vereinigt und gemeinsam der Fotodiode 27 zugeführt. Die jeweils überwiegende Intensität verbleibt in den Lichtstrahlen L1, L2 und erreicht den Strahlkoppler 15 über zwei getrennte Eingänge. Die Lichtstrahlen L1, L2 laufen über diese Eingänge und den Strahlkoppler 15 gegensinnig in die ringförmige Faser 18 ein und laufen in dieser viele male um. Hierbei entstehen über die beschriebene, stimulierte Brillouin-Streuung in jeweils entgegengesetzter Richtung weitere Lichtstrahlen L5 und L6.

Der Strahl L5 verlässt die Faser 18 über den Strahlteiler 15, durchläuft den Strahlteiler 12 und den Modulator 14 und erreicht den Strahlkoppler 16. Im Modulator 14 wird der Strahl L5 optisch mit dem elektrischen Nutzsignal NS phasenmoduliert. Der Lichtstrahl L6 verlässt die Faser 18 in umgekehrter Richtung ebenfalls über den Strahlteiler 15, durchläuft den Strahlteiler 13 und erreicht den Strahlkoppler 16. Die beiden Strahlen L5, L6 werden durch den Strahlkoppler 16 vereinigt und bilden zusammen einen Ausgangsstrahl A, der am Optikausgang 8 aus dem Sender 3 austritt. Dieser Strahl A weist einen Träger mit einer (ersten) optischen Frequenz f1 auf, die im wesentlichen den Frequenzen F1, F2 der Lichtstrahlen L1, L2 entspricht. Dieser optische Träger ist intensitätsmoduliert mit einer zweiten Frequenz f2, die der Differenz der Frequenzen F5 und F6 des fünften und des sechsten Lichtstrahls L5, L6 entspricht. Das hierdurch gegebene Hilfsträgersignal TS ist schliesslich durch das Nutzsignal NS phasenmoduliert. Hierbei sollten die (dritten) Frequenzen f3 des Nutzsignals NS klein gegenüber den anderen Frequenzen f1 und f2 sein. Wegen der hohen optischen Frequenzen bedeutet dies jedoch immer noch, dass die benutzbare Bandbreite wesentlich höher sein kann als bei vergleichbaren elektrischen Einrichtungen.

Die genannten Eigenschaften des Ausgangsstrahls A erklären sich durch die beschriebene stimulierte Brillouin-Streuung in der Faser 18 und durch die Gesetze der klassischen Wellentheorie. Hierfür ist zu beachten, dass der fünfte L5 und der sechste Lichtstrahl L6 beim Zusammenfügen im Strahlkoppler 16 genügend ähnliche, im Idealfall gleiche Intensitäten aufweisen. Je ähnlicher die Intensitäten sind, umso tiefer ist die Intensitätsmodulation des Hilfsträgersignals TS. Wichtig ist weiter, dass der fünfte L5 und der sechste Lichtstrahl L6 beim Zusammenfügen im Strahlkoppler 16 auch im wesentlichen gleichgerichtete Polarisationebenen aufweisen. Die ein oder zwei Polarisationsüberwacher 21 und/oder 23 dienen zum optimalen Erfüllen dieser weiteren Bedingung.

Der geschilderte, generelle Aufbau hat folgende Vorteile gegenüber den bekannten Methoden:
- Die Hilfsträgerfrequenz f2 kann in einem weiten Bereich der GigaHertz-Frequenzen durch Verändern der Speiseströme I1, I2 der beiden Laser 10, 11 variiert werden.
- Die spektrale Breite der aus der Optikfaser 18 austretenden Lichtstrahlen L5, L6 ist wesentlich geringer als die Spektralbreite der von den Lasern 10, 11 ausgesandten Strahlen L1, L2. Dies ist für die Qualität der Strahlvereinigung im Strahlkoppler 16 wichtig und erlaubt die Verwendung relativ billiger Laser 10, 11.
- Da die Lichtstrahlen L1, L2 paarweise und gegensinnig in die Optikfaser 18 einlaufen und entsprechend zwei Lichtstrahlen L5, L6 diese verlassen, kompensieren sich normalerweise störende Einflüsse, z.B. Effekte aus Temperaturänderungen in der Faser 18 und der sonstigen Anordnung.

Bei dem geschilderten generellen Aufbau des Senders 3 kann eine erhebliche Anzahl von Details technisch frei gestaltet werden. Im folgenden werden daher Angaben über die praktische Ausgestaltung des Senders 3 gemacht:
- Als Laser 10, 11 kommen generell alle Arten von Halbleiterlasern infrage, die für optische Kommunikationszwecke geeignet sind. Derartige Laser, insbesondere Ein-Longitudinal-Mode-Laser, lassen sich gemeinsam mit anderen Baueinheiten des Senders 3 fertigen, was ein erheblicher Vorteil ist. Es können aber auch separate Laser höherer Leistung verwendet werden, z.B. Nd:YAG-Laser mit einer Strahlwellenlänge von z.B. 1319 nm.
- Als Strahlteiler 12, 13 und/oder Strahlkoppler 15, 16 lassen sich rein passive oder auch elektrisch steuerbare Elemente einsetzen. Als passive Elemente kommen beispielsweise optisch verkoppelte Fasern infrage, als aktive Elemente z.B. steuerbare Richtkoppler auf der Basis von Indiumphosphat.
- Als Lichtmodulator 14 kommt ein Bauelement infrage, das gesteuert durch eine zeitabhängige, elektrische Spannung V(t) das durchlaufende Licht phasenmoduliert. Solche Elemente gibt es beispielsweise als integrierte, optische Modulatoren.
- Für die Optikfaser 18 kann grundsätzlich jede optische Monomodefaser verwendet werden. Diese Faser muss wenigstens eine Länge von mehreren Metern bis zu etwa hundert Metern besitzen. Bei grösserer Länge passiert das Licht den Strahlkoppler 15 weniger häufig als bei geringerer Länge. Dies vermeidet Verluste im Strahlkoppler 15. Dafür treten leichter Sprünge zwischen verschiedenen, möglichen Kavitätsmoden auf.
- Sprünge zwischen verschiedenen, möglichen Kavitätsmoden lassen sich durch eine Regeleinrichtung vermeiden, die mittels eines piezoelektrisch wirkenden Gebers die Länge der Optikfaser 18 so nachführt, dass nur ein einziger Mode auftreten kann. Hierzu wird die Faser 18 - wie beschrieben - mit Vorteil als einlagige Spule gewickelt.
- Das Hilfsträgersignal TS und seine Frequenz f2 lassen sich stabilisieren, indem die vereinigten Lichtstrahlen L3, L4 über den Strahlkoppler 25 und die Fotodiode 27 in ein elektrisches Steuersignal umgewandelt werden. Dieses Steuersignal dient dann als Eingangsgrösse für eine Steuerschaltung 28, mit deren Hilfe die Differenz der beiden optischen Frequenzen F1, F2 der zwei Lichtstrahlen L1, L2 stabilisiert wird.

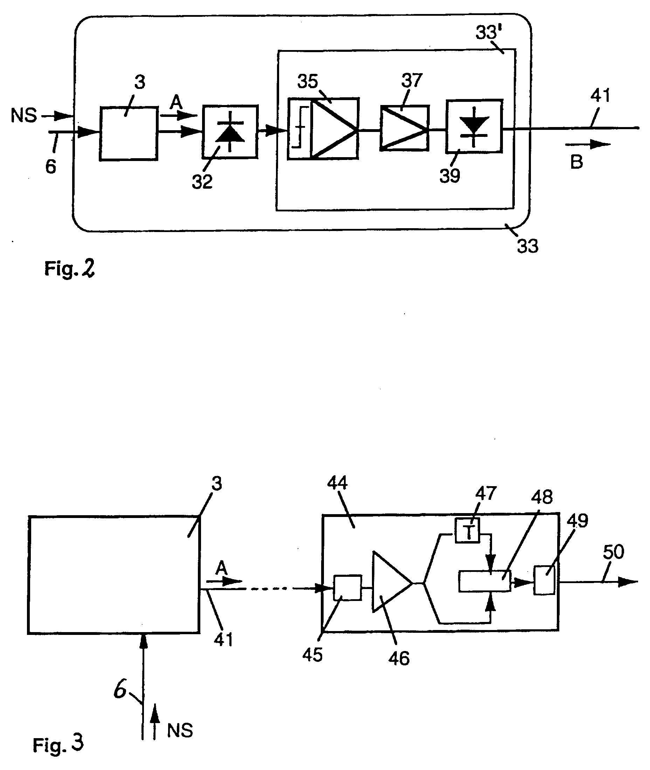

Fig. 2 zeigt das Blockschaltbild einer ersten Einrichtung, bei der der optische Sender 3 einsetzbar ist. Diese Einrichtung bildet eine Leistungs- bzw. Endstufe 33 eines optischen Mikrowellensenders. Hierbei wird der Sender 3 als Modulator relativ geringer Leistung benutzt. Das optische Ausgangssignal dieses Modulators, d.h. der Lichtstrahl A treibt über einen optoelektrischen Wandler 32 die eigentliche, nachgeschaltete Endstufe 33'. Diese umfasst einen hart getasteten Optowandler und Amplitudenbegrenzer 35, eine Treiberstufe 37 und einen Halbleiter-Leistungslaser 39 für z.B. das zweite Fenster einer angeschlossenen, abgehenden Lichtleitfaser 41. Die Endstufe 33' ist ein an sich bekannter optischer Sender mit direkt moduliertem Laser. Der ausgesandte Lichtstrahl B ist dabei wegen des Amplitudenbegrenzers 35 impulsförmig intensitätsmoduliert bzw. hart getastet (hard limited). Da der vom Sender 3 gelieferte Strahl A das periodische Hilfsträgersignal TS durch das Nutzsignal NS phasenmoduliert, überträgt sich diese Modulation auf den Leistungslaser 39 und den Lichtstrahl B.

Anstelle der genannten optischen Endstufe 33' kann in gleicher Weise auch eine elektrische Endstufe mit dem Sender 3 kombiniert werden, z.B. die Endstufe eines elektrischen Richtfunksenders.

Fig. 3 zeigt ein Blockschaltbild einer zweiten Einrichtung, bei der der optische Sender 3 einsetzbar ist. Bei dieser Einrichtung bildet der Sender 3 selbst die Leistungsstufe einer optischen Übertragungsstrecke, bei der die Informationsübertragung digital mit Hilfe einer PSK-Modulation (phase shift keying) erfolgt. Bei dieser Übertragungsmethode werden die beiden Digitalwerte 0 und 1 durch zwei unterschiedliche Frequenzen dargestellt, zwischen denen bei jedem Taktschritt, falls notwendig, umgetastet wird.

Als Empfänger 44 für das ankommende PSK-Signal zeigt Fig. 3 eine Fotodiode 45 mit nachgeschaltetem elektrischen Verstärker 46. Das entstehende elektrische Signal wird anschliessend gefiltert und demoduliert. Hierzu dient vor allem ein ausbalancierter Mixer 48 (double-balanced mixer), der das vorher aufgesplittete und im einen Arm durch eine Verzögerungsstufe 47 verzögerte Signal wieder vereinigt. Ein Integrator 49 beendet die Demodulation und gibt das regenerierte Datensignal an seinem Ausgang 50 ab.

Mit einer Einrichtung entsprechend Fig. 3 kann beispielsweise eine Übertragung über eine bis zu 10 km lange Faser 41 durchgeführt werden bei einer Frequenz des Hilfsträgersignals TS im GigaHertz-Bereich, wie beschrieben, und einem Datenstrom von etwa 150 Mbit/s. Die genannten Werte bilden dabei keine absolute, obere Grenze des Möglichen. Weiter soll bemerkt werden, dass mit einem Sender 3 entsprechend Fig. 3 nicht nur digitale Information, sondern in gleicher Weise auch Information in analoger Form übertragen werden kann, wozu der Empfänger 44 natürlich entsprechend angpasst sein muss.

Der optische Sender 3 bietet trotz der - elektrisch gesehen - sehr hohen Frequenzen technisch keine entscheidenden Probleme. Die Wechselwirkungen zwischen seinen Bestandteilen verlaufen im wesentlichen linear. Dies bewirkt eine überlegene lineare Wirkungsweise des optischen Senders 3 gegenüber vergleichbaren, elektrisch arbeitenden Sendern. Insbesondere ist eine lineare Phasenmodulation bei Frequenzen möglich, bei denen dies bisher nicht möglich war. Der optische Sender 3 erlaubt weiter eine vollständige oder zumindest eine weitgehende elektrooptische Integration. Trotz seines relativ komplizierten Aufbaus ist er daher preiswert herstellbar.

## Patentansprüche

1. Optischer Sender (3) mit Speise- (4, 5) und Steuereingängen (6) und einem Optikausgang (8) zum Aussenden eines kontinuierlichen Lichtstrahls (A),
- wobei der Lichtstrahl (A) eine im wesentlichen konstante erste Frequenz (f1) aufweist und zur Bildung eines periodischen Hilfsträgersignals (TS) mit einer im wesentlichen konstanten zweiten Frequenz (f2) intensitätsmoduliert ist,
- wobei zur Übermittlung eines am Steuereingang (6) anliegenden Nutzsignals (NS) das Hilfsträgersignal (TS) phasenwinkel- oder frequenzmoduliert ist,
- wobei die zweite Frequenz (f2) klein gegenüber der ersten Frequenz (f1) ist, und
- wobei das Nutzsignal (NS) einen Frequenzbereich aufweist, dessen dritte Frequenzen (f3) insgesamt klein gegenüber der zweiten Frequenz (f2) sind,
gekennzeichnet,
durch zwei Laser (10, 11) und eine ringförmig geführte Optikfaser (18), in die die Lichtstrahlen (L1, L2) der Laser (10, 11) gegensinnig einspeisbar sind.

2. Optischer Sender nach Anspruch 1,
dadurch gekennzeichnet,
dass die Optikfaser (18) in sich und mit den Lasern (10, 11) durch einen vierpoligen Strahlkoppler (15) verbunden ist.

3. Optischer Sender nach Anspruch 2,
dadurch gekennzeichnet,
dass der Kopplungsgrad des Strahlkopplers (15) in der Grössenordnung von etwa 1:9 liegt.

4. Optischer Sender nach Anspruch 1,
dadurch gekennzeichnet,
dass die Laser (10, 11) über getrennte Speiseeingänge (4, 5) mit voneinander unabhängigen Speiseströmen (I1, I2) anspeisbar sind.

5. Optischer Sender nach Anspruch 1,
dadurch gekennzeichnet,
dass die Optikfaser (18) eine Länge zwischen wenigen Metern und etwa 100 m aufweist, bevorzugt etwa 40 m.

6. Optischer Sender nach Anspruch 1,
gekennzeichnet weiter
durch zwei Strahlteiler (12, 13), einen zweiten Strahlkoppler (16), einen Lichtmodulator (14) und durch optische Verbindungen zum Verbinden dieser Einheiten, derart,
- dass die Ausgangspole der Laser (10, 11) mit ersten Polen der Strahlteiler (12, 13) verbunden sind,
- dass zweite und dritte Pole der Strahlteiler (12, 13) paarweise mit Polen des ersten und des zweiten Strahlkopplers (15, 16) verbunden sind,
- dass der Lichtmodulator (14) elektrisch mit dem Steuereingang (6) verbunden und zwischen den einen Strahlteiler (12) und den zweiten Strahlkoppler (16) eingefügt ist, und
- dass ein dritter Pol des zweiten Strahlkopplers (16) den Optikausgang (8) bildet.

7. Optischer Sender nach Anspruch 1,
dadurch gekennzeichnet,
dass wenigstens ein Polarisationsüberwacher (21, 23) vorgesehen ist, der in einen Pfad in Richtung des zweiten Strahlkopplers (16) eingefügt ist.

8. Optischer Sender nach Anspruch 3,
dadurch gekennzeichnet,
dass ein einziger Polarisationsüberwacher (21) zwischen den Lichtmodulator (14) und den zweiten Strahlkoppler (16) eingefügt ist.

9. Optischer Sender nach Anspruch 4,
dadurch gekennzeichnet,
dass zusätzlich ein weiterer Polarisationsüberwacher (23) vorgesehen ist, der zwischen den zweiten Strahlteiler (13) und den zweiten Strahlkoppler (16) eingefügt ist.

10. Optischer Sender nach Anspruch 1,
dadurch gekennzeichnet,
dass zusätzlich ein Regelkreis vorgesehen ist mit einem weiteren, den Strahlteilern (12, 13) nachgeschaltetem Strahlkoppler (25), einer diesem nachfolgenden Fotodiode (27) und einer Steuerschaltung (28), zum Stabilisieren der Differenz der optischen Frequenzen (F1, F2) der beiden Laser (10, 11).

11. Optischer Sender nach Anspruch 1,
dadurch gekennzeichnet,
dass zusätzlich ein Regelkreis vorgesehen ist, dessen Stellglied piezoelektrisch auf die als einlagige Spule gewickelte Optikfaser (18) einwirkt, um über deren Länge einen einzigen der möglichen Strahlungsmode zu stabilisieren.

12. Verwendung eines optischen Senders (3) nach einem der vorhergehenden Vorrichtungsansprüche,
dadurch gekennzeichnet,
dass der Sender (3) zum Modulieren einer Leistungsstufe (33') eines optischen Mikrowellensenders (33) dient.

13. Verwendung eines optischen Senders (3) nach einem der vorhergehenden Vorrichtungsansprüche,
dadurch gekennzeichnet,
dass der Sender (3) als Leistungsstufe eines optischen PSK-Senders (Phase Shift Keying) eingesetzt wird.
